(19) Europäisches Patentamt
European Patent Office
Office européen des brevets

(11) **EP 2 243 117 B1**

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(51) Int Cl.:
*G06T 7/20* (2006.01)    *H04N 5/14* (2006.01)

(21) Anmeldenummer: **05742685.0**

(22) Anmeldetag: **01.04.2005**

(86) Internationale Anmeldenummer:
**PCT/EP2005/051485**

(87) Internationale Veröffentlichungsnummer:
**WO 2006/000478 (05.01.2006 Gazette 2006/01)**

(54) **VORRICHTUNG UND VERFAHREN ZUM ERMITTELN EINER BEWEGUNG VON AUFNAHMEBILDERN**

DEVICE AND METHOD FOR DETERMINING A MOVEMENT OF RECORDED IMAGES

DISPOSITIF ET PROCEDE DE DETERMINATION D'UN MOUVEMENT D'IMAGES DE PRISE DE VUES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.06.2004 EP 04014760**

(43) Veröffentlichungstag der Anmeldung:
**27.10.2010 Patentblatt 2010/43**

(73) Patentinhaber: **Hewlett-Packard Development Company, L.P.
Houston, TX 77707 (US)**

(72) Erfinder: **ST JOHN, Ben
81735 München (DE)**

(74) Vertreter: **Samson & Partner
Widenmayerstrasse 5
80538 München (DE)**

(56) Entgegenhaltungen:
**US-A- 3 315 032    US-B1- 6 349 114**

• CHEN X C ET AL: "Lossy adaptive coding of motion vectors with global camera motion compensation" SIGNALS, SYSTEMS AND COMPUTERS, 1996. CONFERENCE RECORD OF THE THIRTIETH ASILOMAR CONFERENCE ON PACIFIC GROVE, CA, USA 3-6 NOV. 1996, LOS ALAMITOS, CA, USA,IEEE COMPUT. SOC, US, 3. November 1996 (1996-11-03), Seiten 105-108, XP010231402 ISBN: 0-8186-7646-9
• PARK S-C ET AL: "Qualitative estimation of camera motion parameters from the linear composition of optical flow" PATTERN RECOGNITION, PERGAMON PRESS INC. ELMSFORD, N.Y, US, Bd. 37, Nr. 4, April 2004 (2004-04), Seiten 767-779, XP004491490 ISSN: 0031-3203
• MARCHAND, ERIC ; CHAUMETTE FRANCOIS: "Virtual Visual Servoing: a framework for real-time augmented reality" EUROGRAPHICS 2002, SAARBRUECKEN, GERMANY,, Bd. 21, Nr. 3, 2. September 2002 (2002-09-02), - 6. September 2002 (2002-09-06) Seiten 289-297, XP002295448 BLACKWELL PUBLISHERS, OXFORD UK, MALDEN MA USA
• GEIGER C ET AL: "Mobile AR4ALL" AUGMENTED REALITY, 2001. PROCEEDINGS. IEEE AND ACM INTERNATIONAL SYMPOSIUM ON NEW YORK, NY, USA 29-30 OCT. 2001, LOS ALAMITOS, CA, USA,IEEE COMPUT. SOC, US, 29. Oktober 2001 (2001-10-29), Seiten 181-182, XP010568065 ISBN: 0-7695-1375-1

**Beschreibung**

Die vorliegende Erfindung bezieht sich auf eine Vorrichtung und ein Vorfahren zum Ermitteln einer Bewegung von Aufnahmebildern und insbesondere eine Vorrichtung und ein Verfahren womit eine Translationsbewegung, eine Rotationsbewegung und eine Zoombewegung sehr effektiv für eine Kamerabewegung relativ zu einem aufgenommenen Objekt ermittelt werden kann.

Zukünftige Anwendungen wie beispielsweise Menüsteuerungen, Spiele oder sogenannte "Augmented-Reality-Systeme" erfordern eine genaue Bestimmung einer Bewegung eines aufgenommenen Objekts oder Bildes. Ferner sind bei sogenannten autonomisch navigierten System wie z.B. Robotersysteme neuartige Vorrichtungen und Verfahren zum Ermitteln einer Bewegung von Aufnahmebildern erforderlich.

"Augmented Reality" bzw. "erweiterte Realität" stellt hierbei ein neues Gebiet der Technik dar, bei dem beispielsweise einer tatsächlichen optischen Wahrnehmung der realen Umgebung gleichzeitig zusätzliche virtuelle Informationen überlagert werden.

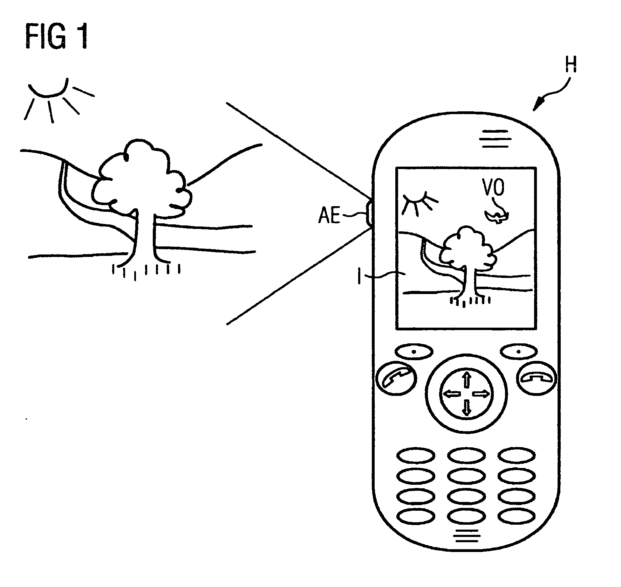

Figur 1 zeigt eine vereinfachte Darstellung eines derartigen "Augmented-Reality-Systems", wie es beispielsweise in einem mobilen Telekommunikationsendgerät bzw. Handy H implementiert sein kann. Gemäß Figur 1 wird von einer im mobilen Endgerät H integrierten Kamera bzw. Aufnahmeeinheit AE ein Bild I von einer realen Umgebung bzw. einem aufzunehmenden Objekt aufgenommen und an einer Anzeigeeinheit angezeigt. Zur Erweiterung dieses aufgenommenen Bildes I wird als sogenanntes virtuelles Objekt VO beispielsweise ein Schmetterling dem realen Bild überlagert, wodurch sich eine erweiterte Realität bzw. die sogenannte "Augmented Reality" ergibt. Das virtuelle Objekt VO kann in gleicher Weise ein anderer Gegenstand wie beispielsweise ein Gebäude darstellen, welches in die in Figur 1 dargestellte Landschaft von einer nicht näher beschriebenen Software integriert wird, um beispielsweise bereits in einer Planungsphase eine verbesserte Vorstellung zu ermöglichen.

Wichtig bei derartigen Anwendungen ist jedoch hierbei, dass eine durchgeführte Kamerabewegung, welche zu einer Bewegung des aufgenommenen Bildes I innerhalb der Anzeige führt, auch das virtuelle Objekt vo entsprechend mit bewegt, damit beispielsweise sein relativer Standort zum aufgenommenen Bild gleich bleibt.

Bisher sind lediglich effiziente Verfahren zur Ermittlung einer sogenannten Translation bzw. verschiebebewegung des Bildes bekannt, wobei beispielsweise effiziente vergleichsalgorithmen bis hin zu fortschrittlichen, aber einen hohen Rechenaufwand benötigenden Merkmals-Auszugs-Vergleichen durchgeführt werden. Insbesondere zum Ermitteln eines zoomfaktors, d.h. eines vergrößerns oder verkleinerns des aufgenommenen Bildes oder einer Rotation des Bildes sind jedoch keine brauchbare und effiziente Vorrichtungen und Verfahren bekannt, die insbesondere für mobile Datenverarbeitungseinheiten wie beispielsweise mobile Telekommunikationsendgeräte mit ihren begrenzten Ressourcen geeignet wären.

Derartige herkömmliche Verfahren und Vorrichtungen zur Ermittlung eines Zoomfaktors und einer Rotation benötigen vielmehr einen außerordentlich hohen Rechenaufwand und hohe Verarbeitungsgeschwindigkeiten.

US 6,349,114 B1 und der Artikel "Lossy adaptive coding of motion vectors with global camera motion compensation" von X. C. Chen und N. Chaddha; conference record of the thirtieth asilomar conference on pacific grove, Kalifornien, USA, 3.-6. November 1996, IEEE Comput. Soc., 3. November 1996, Seiten 105-108 offenbaren die Merkmale des Oberbegriffs der unabhängigen Patentansprüche der vorliegenden Erfindung.

Der Artikel "Qualitative estimation of camera motion parameters from the linear composition of optical flow", von S.-C. Park et al., pattern recognition, Pergamon Press Inc., Elmsforth, N.Y., USA, Band 37, Nr. 4, April 2004, Seiten 767-779 offenbart Gleichungen zur Bestimmung von Bewegungsparametern für Bewegungen von Aufnahmebildern.

Die Artikel "Virtual visual servoing: A framework for real-time augmented reality", von E. Marchand, Eurographics 2002, Saarbrücken, Deutschland, Band 21, Nr. 3, 2. September 2002 bis 6. September 2002, Seiten 289-298 und "Mobile AR4ALL" von C. Geiger et al., IEEE and ACM International Symposium on New York, N.Y., USA, IEEE Comput. Soc., 29 October 2001, Seiten 181-182 betreffen mobile Datenverarbeitungseinrichtungen in Form von Cameras und persönlichen digitalen Assistenten.

Der Erfindung liegt daher die Aufgabe zu Grunde, eine Vorrichtung und ein Verfahren zum Ermitteln einer Bewegung von Aufnahmebildern zu schaffen, die äußerst einfach und schnell ist, wodurch sie auch in Datenverarbeitungseinheiten mit begrenzten Ressourcen, wie z.B. mobilen Endgeräten und insbe-sondere mobilen Telekommunikationsendgeräten verwendet werden kann.

Erfindungsgemäß wird diese Aufgabe hinsichtlich des verfahrens durch die Maßnahmen des Patentanspruchs 1 und hinsichtlich der Vorrichtung durch die Merkmale des Patentanspruchs 9 gelöst.

vorzugsweise werden zunächst für zumindest zwei Teilbildbereiche in zeitlich aufeinander folgenden Aufnahmebildern einer Bildfolge die zugehörigen Bewegungsvektoren und ferner Bewegungsvektor-Ortskoordinaten ermittelt, die den Bewegungsvektoren zugeordnet sind, wobei ein Ortskoordinatensystem seinen Ursprung in einem der optischen Achse einer Aufnahmeeinheit zum Erzeugen der Aufnahmebilder zugehörigen Punkt aufweist. Auf der Grundlage dieser ermittelten Bewegungsvektoren und der zugehörigen ermittelten Bewegungsvektor-Ortskoordinaten können anschließend die Bewegungsparameter der Aufnahmebilder ermittelt werden. Auf Grund der vereinfachenden Annahme, dass der Mittelpunkt des Aufnahmebildes mit der optischen Achse der Aufnahmeeinheit übereinstimmt, können unter Berücksichtigung der Abstände der Bewegungsvektoren von diesem Punkt (bzw. deren Ortskoordinaten) die Bewegungsparameter einer x-Translation, einer y-Translation, einer Rotation und eines Zoomfaktors mit minimalem Rechenaufwand und somit äußerst schnell und zuverlässig ermittelt werden. Ein derartiges Verfahren ist somit erstmals auch für mobile Endgeräte mit begrenzten Ressourcen besonders geeignet.

Vorzugsweise werden zum Ermitteln der Bewegungsvektoren derartige Teilbildbereiche der Aufnahmebilder verwendet, welche punktsymmetrisch zum Ursprung des Koordinatensystems bzw. des Bildmittelpunkts liegen. Bei einem derartigen Sonderfall können eine Vielzahl von Gleichungsteilen einer Lösungsgleichung unberücksichtigt bleiben, wodurch sich eine besondere Steigerung der Effizienz ergibt.

Grundsätzlich können die verwendeten Teilbildbereiche zum Ermitteln der Bewegungsvektoren auch achsensymmetrisch zur x-oder y-Achse des Koordinatensystems liegen oder derart ausgewählt werden, dass ein Mittelwert ihrer zugehörigen Bewegungsvektor-Ortskoordinaten den Wert [0,0] ergibt, wodurch sich ebenfalls Vereinfachungen bei der Lösungsgleichung ergeben und somit eine Effizienzsteigerung ermöglicht wird. Insbesondere bei einer Anzahl von zwei oder vier Bewegungsvektoren, welche die oben genannten Randbedingungen erfüllen, ergibt sich ein minimaler Rechenaufwand, wobei eine Bewegung der Aufnahmeeinheit relativ zum aufgenommenen Objekt mit ausreichend hoher Qualität ermittelt werden kann.

Hinsichtlich der Vorrichtung ist vorzugsweise eine Aufnahmeeinheit zum Erzeugen einer Bildfolge von Aufnahmebildern vorgesehen, wobei eine Bewegungsvektor-Ermittlungseinheit zumindest zwei Bewegungsvektoren für Teilbildbereiche in zeitlich aufeinander folgenden Aufnahmebildern einer Bildfolge ermittelt und eine Orts-Ermittlungseinheit die den Bewegungsvektoren zugehörigen Bewegungsvektor-ortskoordinaten ermittelt, wobei ein (Orts-)Koordinatensystem seinen Ursprung in einem der optischen Achse der einer Aufnahmeeinheit zugehörigen Punkt aufweist. Auf der Grundlage dieser ermittelten Bewegungsvektoren und der zugehörigen ermittelten Bewegungsvektor-Ortskoordinaten bzw. der Abstände zum Ursprung kann schließlich eine Bewegungsparameter-Ermittlungseinheit die gewünschten Bewegungsparameter beispielsweise einer Translation, einer Rotation und eines Zoomfaktors auf einfache und schnelle Art und Weise ermitteln.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:

Figur 1 eine vereinfachte Darstellung eines Anwendungsfalls für das erfindungsgemäße Verfahren und die zugehörige Vorrichtung zum Ermitteln einer Bewegung von Aufnahmebildern;

Figur 2 eine vereinfachte Darstellung eines Aufnahmebildes mit Bewegungsvektoren zur Veranschaulichung einer Translation;

Figur 3 eine vereinfachte Darstellung eines Aufnahmebildes mit Bewegungsvektoren zur Veranschaulichung einer Rotation;

Figur 4 eine vereinfachte Darstellung eines Aufnahmebildes mit Bewegungsvektoren zur Veranschaulichung einer Zoombewegung;

Figur 5 eine vereinfachte Darstellung eines Aufnahmebildes mit Bewegungsvektoren zur Veranschaulichung einer kombinierten Rotation und Translation;

Figur 6 eine vereinfachte Darstellung eines Aufnahmebildes mit Bewegungsvektoren zur Veranschaulichung einer Rotation, wobei eine Rotationsachse außerhalb einer optischen Achse der Aufnahmeeinheit liegt;

Figur 7 eine vereinfachte Darstellung eines Aufnahmebildes mit zugehörigen Teilbildbereichen und Bewegungsvektoren sowie zugehörigen Lösungsmatrizen zur Veranschaulichung des erfindungsgemäßen Verfahrens; und

Figur 8 eine vereinfachte Blockdarstellung zur veranschaulichung der erfindungsgemäßen Vorrichtung.

Das nachfolgend beschriebene Verfahren sowie die zugehörige Vorrichtung zeigt ein äußerst effizientes Verfahren zum Ermitteln einer Bewegung von Aufnahmebildern bzw. von Bewegungen einer Kameraeinheit relativ zu einem aufgenommenen Objekt, welches insbesondere für mobile Datenverarbeitungseinheiten bzw. Endgeräte wie beispielsweise mobile Telekommunikationsendgeräte, Handys oder sogenannte PDAs (Personal Digital Assistant) geeignet ist. Da derartige Geräte nur begrenzte Ressourcen insbesondere hinsichtlich einer Rechenleistung, einer Rechengeschwindigkeit und eines Speicherplatzes aufweisen, sind herkömmliche Verfahren zur Ermittlung einer Bewegung üblicherweise zu langsam und damit ungeeignet.

Zur Realisierung eines derartigen einfachen und daher effizienten Verfahrens wird die Annahme getroffen, dass die optische Achse einer Aufnahmeeinheit zum Erzeugen einer Folge von Aufnahmebildern mit dem Mittelpunkt des Aufnahmebildes zusammenfällt, der einen Ursprung eines Koordinatensystems darstellt. Unter Berücksichtigung eines Abstands der jeweiligen Bewegungsvektoren bzw. der zugehörigen Teilbildbereiche zu diesem Ursprung des Koordinatensystems bzw. der Ortskoordinaten der Bewegungsvektoren können erstmalig auch eine Rotationsbewegung und eine Zoombewegung einfach und zuverlässig ermittelt werden.

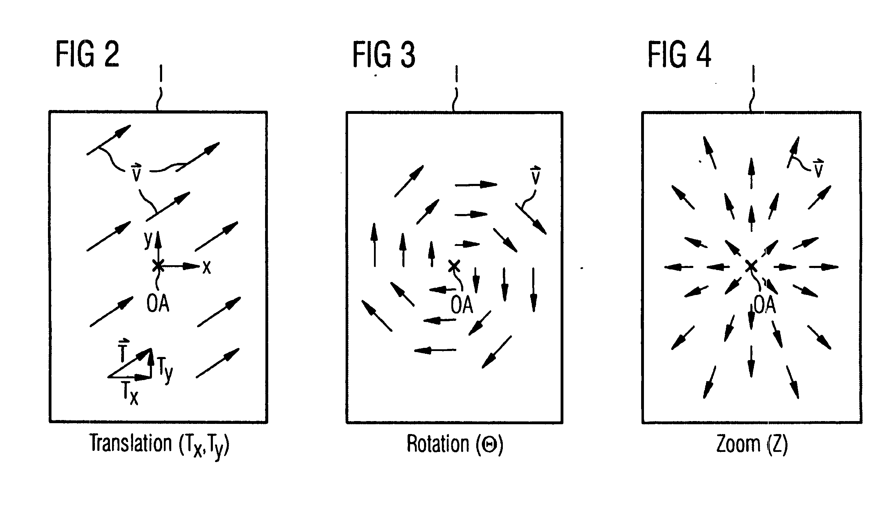

Zunächst werden anhand der Figuren 2 bis 6 die grundsätzlich möglichen Bewegungen einer Aufnahmeeinheit bzw. Kamera relativ zu einem aufgenommenen Objekt vereinfacht dargestellt. Die Ermittlung der jeweiligen Bewegungsvektoren für Teilbereiche in zeitlich aufeinander folgenden Aufnahmebildern einer Bildfolge wird hierbei als bekannt vorausgesetzt, wobei insbesondere auf die bekannten Verfahren "motion estimation" und "pixel flow" verwiesen wird, wie sie beispielsweise in Videokameras zur Vermeidung von unerwünschten "Wackelbildern" eingesetzt werden.

Im einfachsten Fall kann zur Ermittlung der Bewegungsvektoren in zwei zeitlich aufeinander folgenden Aufnahmebildern beispielsweise eine Abweichung einer Position eines unverschobenen Teilbildbereichs zu einer Position eines verschobenen Teilbildbereichs in einem zeitlich folgenden Aufnahmebild ermittelt werden. Ein Teilbildbereich stellt hierbei einen kleinen Teil bzw. Ausschnitt eines sogenannten Suchbildbereichs des aufgenommenen Bildes dar, wobei lediglich eine Übereinstimmung der Teilbildbereiche innerhalb eines Suchbildbereichs für zwei aufeinander folgende Aufnahmebilder durchgeführt wird und sich daraus unmittelbar der Bewegungsvektor ergibt.

Figur 2 zeigt eine vereinfachte Darstellung eines Aufnahmebildes I mit einer Vielzahl von Bewegungsvektoren v zur Veranschaulichung einer reinen Translation bzw. einer reinen Verschiebe-Bewegung. Gemäß Figur 2 wurde beispielsweise eine Aufnahmeeinheit bzw. Kamera in einem Winkel von ca. 45° schräg nach links unten bewegt, wodurch die in umgekehrter Richtung dargestellten Bewegungsvektoren v durch beispielsweise die vorstehend beschriebenen Verfahren ermittelt werden.

Mit OA ist hierbei ein Mittelpunkt des Aufnahmebildes I bezeichnet, der mit der optischen Achse der Aufnahmeeinheit bzw. Kamera, welche die Aufnahmebilder I erzeugt, übereinstimmt. Zur genauen Beschreibung der Positionen der verschiedenen Bewegungsvektoren wird ein x-/y-Koordinatensystem eingeführt, dessen Ursprung mit dem Mittelpunkt bzw. der optischen Achse OA übereinstimmt. Somit können die Bewegungsvektoren v als reine Translationsvektoren T in ihre zugehörige x-Translation $T_x$ zur Quantifizierung einer Verschiebebewegung in x-Richtung und eine y-Translation $T_y$ zur Quantifizierung einer Verschiebe-Bewegung in y-Richtung zerlegt werden. Eine derartige Ermittlung einer reinen Translation ist folglich relativ einfach.

Figur 3 zeigt nunmehr eine vereinfachte Darstellung eines Aufnahmebildes I mit Bewegungsvektoren v zur Veranschaulichung einer reinen Rotation der Aufnahmeeinheit bzw. Kamera relativ zu einem aufgenommenen Objekt. Gemäß Figur 3 sind die dabei entstehenden Bewegungsvektoren v im Wesentlichen kreisförmig um die optische Achse OA bzw. den Ursprung des (Orts-) Koordinatensystems angeordnet, wobei ihre Länge im Wesentlichen von einem Abstand zum Ursprung des Koordinatensystems abhängt. wie aus Figur 3 ersichtlich ist, ist die Ermittlung einer Rotation folglich bereits wesentlich komplexer, da nicht nur eine Länge, sondern auch eine Richtung der jeweiligen Bewegungsvektoren von einer jeweiligen x- und y-Koordinate im Koordinatensystem abhängt.

Figur 4 zeigt nun weiterhin eine vereinfachte Darstellung eines Aufnahmebildes I mit einer reinen Zoombewegung, die beispielsweise durch ein Heranführen oder Entfernen der Aufnahmeeinheit an das aufgenommene Objekt oder durch eine entsprechende optische Zoomvorrichtung realisiert werden kann. Die bei einem derartigen reinen Zoomvorgang bzw. einer zoombewegung ermittelten Bewegungsvektoren v sind hierbei sternförmig bzw. explosionsförmig um den Mittelpunkt des Aufnahmebildes bzw. den Ursprung des Koordinatensystems oder der optischen Achse OA angeordnet. Bei der in Figur 4 dargestellten zoombewegung handelt es sich um ein Heranführen der Kamera relativ zum aufgenommenen Objekt, weshalb die Bewegungsvektoren v explosionsartig vom Ursprung OA nach außen zeigen und für einen kleinen Abstand vom Ursprung kleine Längen bzw. Beträge aufweisen, während Bewegungsvektoren mit großem Abstand zum Ursprung größere Längen bzw. Beträge aufweisen.

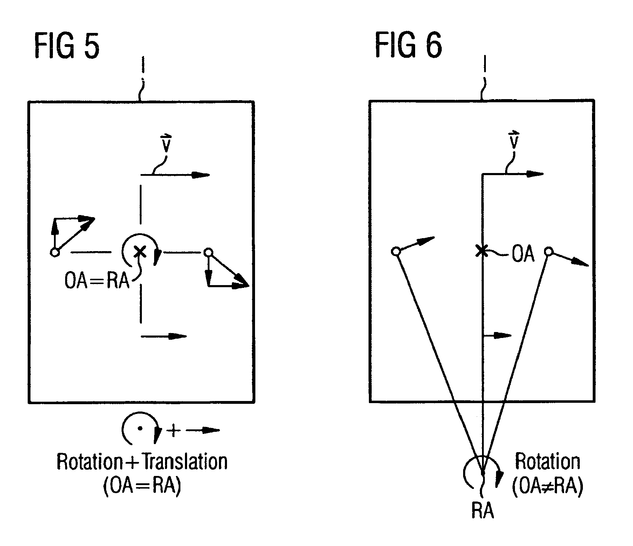

Die Figuren 5 und 6 zeigen nunmehr kombinierte Bewegungsarten, wobei in Figur 5 beispielsweise eine Rotation in Kombination mit einer Translation in x-Richtung betrachtet wird. Bei einer derartigen komplexen Bewegung verlängern sich in der oberen Hälfte des Aufnahmebildes I die Bewegungsvektoren auf Grund der Rotation um einen Rotationsanteil, während im unteren Teil die reinen Translationsvektoren sich um den Rotationsanteil verkürzen. Andererseits zeigen die resultierenden Bewegungsvektoren auf der x-Achse des Koordinatensystems einen Winkel zur x-Achse, da sie sich nunmehr aus einem in x-Richtung zeigenden Translationsanteil und einem in y-Richtung zeigenden Rotationsanteil zusammensetzen.

In gleicher weise zeigt Figur 6 eine vereinfachte Darstellung eines Aufnahmebildes mit Bewegungsvektoren v zur Veranschaulichung von wiederum einer Rotation, wobei jedoch eine Rotationsachse RA weit außerhalb der optischen Achse OA bzw. des Ursprungs des Koordinatensystems liegt. Bei einer derartigen Rotation ergeben sich wiederum Translationskomponenten in Verbindung mit Rotationskomponenten, die zu unterschiedlichen Längen und Richtungen der Bewegungsvektoren in Abhängigkeit von einer jeweiligen x-/y-Koordinate des Bewegungsvektors bzw. des zugehörigen Teilbildbereichs führen.

Kombiniert man nunmehr die bereits kombinierten Bewegungsvektoren gemäß Figuren 5 oder 6 noch mit einer Zoombewegung gemäß Figur 4, ergeben sich daraus weiter veränderte resultierende Bewegungsvektoren.

In Kenntnis dieser grundsätzlichen Bewegungsformen und unter der Annahme, dass die optische Achse mit dem Ursprung des orthogonalen x-/y-Koordinatensystems bzw. dem Mittelpunkt des Aufnahmebildes I zusammenfällt, können nunmehr die einzelnen Bewegungsanteile rückermittelt werden, wodurch sich auf eine Kamerabewegung bzw. eine Bewegung des aufgenommenen Objekts schließen lässt und eine Vielzahl von Anwendungen wie beispielsweise eine Menüsteuerung, eine Spielsteuerung, ein autonomisches Navigieren oder eine Steuerung von sogenannten "Augmented-Reality-Systemen" realisiert werden kann.

Demzufolge werden zunächst zumindest zwei Bewegungsvektoren für Teilbildbereiche in zeitlich aufeinander folgenden Aufnahmebildern einer Bildfolge ermittelt und ferner die den Bewegungsvektoren zugehörigen Bewegungsvektor-Ortskoordinaten erfasst, wobei der Ursprung eines Koordinatensystems mit der optischen Achse OA einer Kamera bzw. Aufnahmeeinheit zusammenfällt. Auf der Grundlage der ermittelten Bewegungsvektoren und der zugehörigen ermittelten Bewegungsvektor-Ortskoordinaten können nunmehr die Bewegungsparameter wie z.B. eine x-Translation $T_x$ zur Quantifizierung einer Verschiebebewegung in x-Richtung, eine y-Translation $T_y$ zur Quantifizierung einer Verschiebe-Bewegung in y-Richtung, eine Rotation $\theta$ zur Quantifizierung einer Drehbewegung, und ein Zoomfaktor Z zur Quantifizierung einer Zoombewegung ermittelt werden.

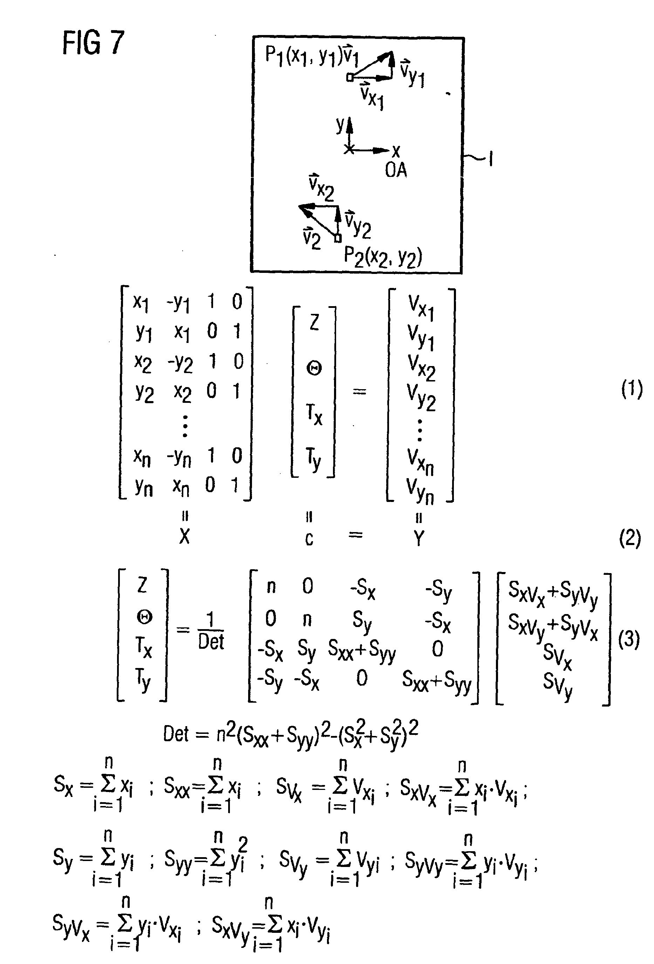

Figur 7 zeigt eine vereinfachte Darstellung eines Aufnahmebildes mit zwei betrachteten Teilbildbereichen $P_1$ und $P_2$ sowie zugehörigen Bewegungsvektoren $v_1$ und $v_2$, sowie die zugehörigen Lösungsmatrizen zur Bestimmung der Bewegungsparameter $T_x$, $T_y$, $\theta$ und Z. Gleiche Bezugszeichen bezeichnen hierbei gleiche oder entsprechende Elemente wie in den Figuren 1 bis 6, weshalb auf eine wiederholte Beschreibung nachfolgend verzichtet wird.

Gemäß Gleichungen 1 und 2 bestimmen sich die n Bewegungsvektoren bzw. deren Bewegungsvektoranteile $v_{xii}$ und $v_{yii}$ in x- und y-Richtung als Bewegungsvektormatrix Y. Diese Bewegungsvektormatrix Y ergibt sich aus dem Matrix-Produkt der Bewegungsparametermatrix c, welche die Bewegungsparameter $T_x$ für die x-Translation, $T_y$ für die y-Translation, $\theta$ für die Rotation und Z für den Zoomfaktor aufweist, mit einer Matrix X. Die Matrix X stellt hierbei eine Matrix von n Zeilen und vier Spalten dar, welche im wesentlichen die Auswirkungen einer Zoombewegung und einer Rotationsbewegung auf die Verschiebebewegung beschreibt.

Gemäß einem ersten Ausführungsbeispiel sei zur Vereinfachung davon ausgegangen, dass lediglich zwei Teilbildbereiche zur Ermittlung von lediglich zwei Bewegungsvektoren in zeitlich aufeinander folgenden Aufnahmebildern einer Bildfolge betrachtet werden. Damit entfällt der untere Teil der Matrix X, wodurch sich die Matrixmultiplikation

$$X \quad c \ = \ Y$$

wie folgt vereinfacht:

$$v_{x1} \ = \ Zx_1 \ - \ \theta y_1 \ + \ T_x$$

$$v_{y1} \ = \ Zy_1 \ + \ \theta x_1 \ + \ T_y$$

$$v_{x2} \ = \ Zx_2 \ - \ \theta y_2 \ + \ T_x$$

$$v_{y2} \ = \ Zy_2 \ + \ \theta x_2 \ + \ T_y$$

Somit ergeben sich für jeden Bewegungsvektor zwei Gleichungen und insgesamt vier Unbekannte, wodurch sich genau eine Lösung ergibt.

Genauer gesagt ergibt sich für den Zoomfaktor Z:

$$z = \frac{(x_2 - x_1) \times (v_{x2} - v_{x1}) + (y_2 - y_1) \times (v_{y2} - v_{y1})}{(x_2 - x_1)^2 + (y_2 - y_1)^2}$$

Für die Drehbewegung ergibt sich der Rotationswert $\theta$ zu:

$$\theta = \frac{(x_2 - x_1) \times (v_{y2} - v_{y1}) - (y_2 - y_1) \times (v_{x2} - v_{x1})}{(x_2 - x_1)^2 + (y_2 - y_1)^2}$$

Für sehr kleine $\theta$ gilt hierbei $\theta \cong a$, wobei a den Rotationswinkel darstellt. Für große $\theta$ bzw. eine genaue Berechnung des Rotationswinkels a gilt:

$$\alpha = \tan^{1}(\theta).$$

Die Translationskomponenten in x- bzw. y-Richtung ergeben sich wie folgt:

$$T_x = v_{x1} - zx_1 + \theta y_1$$

und

$$T_y = v_{y1} - zy_1 - \theta x_1.$$

In gleicher Weise können selbstverständlich auch die $x_2$- und $y_2$-Werte zur Berechnung der x-Translation $T_x$ und y-Translation $T_y$ verwendet werden.

Gemäß einem bevorzugten zweiten Ausführungsbeispiel ergibt sich eine weitere Vereinfachung der vorstehenden Lösungsmatrix dadurch, dass die Teilbildbereiche bzw. die zugehörigen Bewegungsvektoren punktsymmetrisch zum Ursprung des Koordinatensystems liegen bzw. ausgewählt werden, wie sie beispielsweise in Figur 7 dargestellt sind.

In diesem Falle gilt $x_1 = -x_2 = x$ und $y_1 = -y_2 = y$.

Dadurch vereinfachen sich die vorstehend genannten Gleichungen dahingehend, dass

$$z = \frac{x(v_{x2} - v_{x1}) + y(v_{y2} - v_{y1})}{2(x^2 + y^2)}$$

$$\theta = \frac{x(v_{y2} - v_{y1}) - y(v_{x2} - v_{x1})}{2(x^2 + y^2)}$$

$$T_x = \frac{v_{x1} + v_{x2}}{2}$$

$$T_y = \frac{v_{y1} + v_{y2}}{2}$$

Eine weitere Vereinfachung ergibt sich gemäß einem dritten Ausführungsbeispiel für den in Figur 7 dargestellten Fall dadurch, dass die Punkte ferner entweder auf der x- oder auf der y-Achse liegen. Genauer gesagt sind gemäß Figur 7 die x-Komponenten 0, d.h. $x_1 = x_2 = 0$. Daraus ergeben sich die weiter vereinfachten Bewegungsparameter

$$Z = \frac{v_{y2} - v_{y1}}{2y}$$

und

$$\theta = \frac{v_{x1} - v_{x2}}{2y}$$

Obwohl sich bei einer derartigen Annahme das Verfahren sehr stark vereinfacht und sich somit eine besonders hohe Effizienz zeigt, werden vorzugsweise mehr als zwei Bewegungsvektoren und insbesondere vier Bewegungsvektoren verwendet.

Grundsätzlich kann jedoch eine beliebige Anzahl n von Bewegungsvektoren zur Bestimmung der Bewegungsparameter herangezogen werden, was nachfolgend anhand einer allgemeinen Betrachtung im Einzelnen beschrieben werden soll.

Falls mehr als zwei Bewegungsvektoren ausgewählt bzw. ermittelt werden, ergibt sich eine Überbestimmung der in Figur 7 dargestellten Gleichung 1 bzw. der daraus resultierenden Kurzform gemäß Gleichung 2. Es müssen daher sogenannte "best fit"-Verfahren zur eindeutigen Bestimmung der Bewegungsparameter verwendet werden. Eines der einfachsten Verfahren ist das sogenannte "Least Squares Regression"-Verfahren, bei dem die Summe der Fehlerquadrate zwischen gemessenen und vorhergesehenen Werten minimiert werden. Grundsätzlich sind jedoch auch andere Fehlerminimierungsverfahren für derartige überbestimmte Systeme möglich, wobei sich jedoch ein höherer Rechenaufwand ergibt.

Für den Fall von n Bewegungsvektoren $v_{xi}$, $v_{yi}$ mit den zugehörigen Bewegungsvektor-Ortskoordinaten $(x_i, y_i)$, mit i = 1 bis n, ergibt sich wiederum die in Gleichung 1 dargestellte Matrixgleichung, die verkürzt als $xc = Y$ dargestellt werden kann. Gemäß dem "Least Squares Regression"-Fehlerminimierungsverfahren wird diese Gleichung 1 mit der transponierten Matrix $X^r$ von X multipliziert, wodurch sich die Gleichung

$$X^T X c = X^T Y$$

ergibt. Aufgelöst nach der Bewegungsparametermatrix c ergibt sich dadurch:

$$c = (X^T X)^{-1} X^T Y.$$

Zur vereinfachten Darstellung gelten nunmehr die nachfolgenden Definitionen. Dadurch ergibt sich in allgemeiner Schreibweise für die Bewegungsparametermatrix c die nachfolgende Lösungsgleichung:

$$\begin{bmatrix} Z \\ \Theta \\ T_x \\ T_y \end{bmatrix} = \frac{1}{Det} \begin{bmatrix} n & 0 & S_x & S_y \\ 0 & n & S_y & S_x \\ S_x & S_y & S_{xx}+S_{yy} & 0 \\ S_y & S_x & 0 & S_{xx}+S_{yy} \end{bmatrix} \begin{bmatrix} S_{xv_x}+S_{yv_y} \\ S_{xv_y}-S_{yv_x} \\ S_{v_x} \\ S_{v_y} \end{bmatrix}$$

mit

$$Det = n^2(S_{xx}+S_{yy})^2 - (S_x^2+S_y^2)^2$$

$$S_x = \sum_{i=1}^{n} x_i \quad S_{xx} = \sum_{i=1}^{n} x_i^2 \quad S_{v_x} = \sum_{i=1}^{n} v_{xi} \quad S_{xv_x} = \sum_{i=1}^{n} x_i v_{xi}$$

$$S_y = \sum_{i=1}^{n} y_i \quad S_{yy} = \sum_{i=1}^{n} y_i^2 \quad S_{v_y} = \sum_{i=1}^{n} v_{yi} \quad S_{yv_y} = \sum_{i=1}^{n} y_i v_{yi}$$

$$S_{yv_x} = \sum_{i=1}^{n} y_i v_{xi} \quad S_{xv_y} = \sum_{i=1}^{n} x_i v_{yi} \quad ,$$

wobei $x_i$, $y_i$ die Bewegungsvektor-Ortskoordinaten, n die Anzahl der Bewegungsvektoren und $v_{xi}$, $v_{yi}$ die Bewegungsvektoren in x- und y-Richtung darstellen.

Dies ergibt unmittelbar die Werte für einen Zoomfaktor Z, eine Rotation θ, eine x-Translation $T_x$ und eine y-Translation $T_y$, wodurch eine zoombewegung, eine Drehbewegung und eine verschiebe-Bewegung in x- und y-Richtung quantifiziert bzw. größenmäßig angegeben werden kann.

Durch geeignete Auswahl der Bewegungsvektor-Ortskoordinaten kann diese Gleichung wiederum sehr stark vereinfacht werden.

Wenn beispielsweise die Bewegungsvektor-Ortskoordinaten (x, y) achsensymmetrisch zur x- oder y-Achse des Koordinatensystems liegen, so ergeben sich die Summenwerte der jeweiligen x- und y-Werte zu [0].

In gleicher Weise können die Bewegungsvektor-Ortskoordinaten bzw. die Teilbildbereiche derart ausgewählt werden, dass ein Mittelwert ihrer zugehörigen Bewegungsvektor-Ortskoordinaten wiederum den Wert [0,0] ergibt, wodurch auch andere Fälle als die vorstehend beschriebene Achsensymmetrie zur x- oder y-Achse eine entsprechende vereinfachung bringen. In diesem Fall ergibt sich die x- und y-Translation zu:

$$T_x = S_{v_x}/n \quad und \quad T_y = S_{v_y}/n.$$

In gleicher Weise ergeben sich für den Zoomfaktor Z und die Rotation θ die Werte:

$$Z = \frac{S_{xv_x} + S_{yv_y}}{S_{xx} + S_{yy}}$$

$$\theta = \frac{S_{xv_y} - S_{yv_x}}{S_{xx} + S_{yy}}.$$

Diese zuletzt genannten Gleichungen zeigen das bevorzugte vierte Ausführungsbeispiel zur Ermittlung einer Bewegung von Aufnahmebildern, wobei jedoch auch die Spezialfälle mit zwei oder vier Bewegungsvektoren eine effiziente Ermittlung einer Bewegung bei ausreichend hoher Genauigkeit ermöglichen.

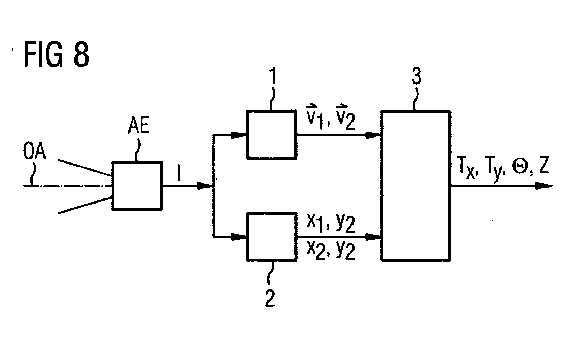

Die Figur 8 zeigt nunmehr eine Vorrichtung zum Ermitteln einer Bewegung von Aufnahmebildern gemäß der vorliegenden Erfindung, wobei mit einer Aufnahmeeinheit AE wie beispielsweise einer Kameraeinheit eine Folge von Aufnahmebildern erzeugt werden. Eine Bewegungsvektor-Ermittlungseinheit 1 ermittelt zumindest zwei Bewegungsvektoren für Teilbildbereiche in zeitlich aufeinander folgenden Aufnahmebildern, wobei eine Orts-Ermittlungseinheit 2 die den Bewegungsvektoren zugehörigen Bewegungsvektor-Ortskoordinaten ermittelt, wobei ein Ursprung des Koordinatensystems in einem der optischen Achse OA der Aufnahmeeinheit AE zugehörigen Punkt liegt. Unter Verwendung der ermittelten Bewegungsvektoren $v_1$, $v_2$ und der zugehörigen ermittelten Bewegungsvektor-Ortskoordinaten x, y können nunmehr die Bewegungsparameter $T_x$, $T_y$, $\theta$ und Z durch eine Bewegungsparameter-Ermittlungseinheit 3 äußerst effizient und ausreichend genau ermittelt werden. Die Bewegungsparameter-Ermittlungseinheit 3 führt insbesondere die vorstehend beschriebenen vereinfachten Matrixberechnungen durch.

Die Erfindung wurde vorstehend anhand eines mobilen Telekommunikationsendgeräts mit einem "Augmented-Reality-System" beschrieben. Sie ist jedoch nicht darauf beschränkt und umfasst in gleicher Weise alternative Datenverarbeitungseinheiten zur Ansteuerung alternativer Anwendungsprogramme.

## Patentansprüche

1. verfahren zum Ermitteln einer Bewegung von Aufnahmebildern mit den Schritten:

   a) Ermitteln von zumindest zwei Bewegungsvektoren ($v_1$, $v_2$) für Teilbildbereiche ($P_1$, $P_2$) in zeitlich aufeinander folgenden Aufnahmebildern (I) einer Bildfolge;
   b) Ermitteln von den Bewegungsvektoren ($v_1$, $v_2$) zugehörigen Bewegungsvektor-Ortskoordinaten (x, y), wobei ein Koordinatensystem einen Ursprung (OA) in einem der optischen Achse einer Aufnahmeeinheit (AE) zum Erzeugen der Aufnahmebilder (I) zugehörigen Punkt aufweist; und
   c) Ermitteln von Bewegungsparametern ($T_x$, $T_y$, $\theta$, z) der Aufnahmebilder auf der Grundlage der ermittelten Bewegungsvektoren ($v_1$, $v_2$) und der zugehörigen ermittelten Bewegungsvektor-Ortskoordinaten (x, y),

   **dadurch gekennzeichnet, dass** die zum Ermitteln der Bewegungsvektoren ($v_1$, $v_2$) verwendeten Teilbildbereiche ($P_1$, $P_2$) punktsymmetrisch zum Koordinatensystem-Ursprung (OA) liegen.

2. Verfahren nach Patentanspruch 1,
   **dadurch gekennzeichnet, dass** die Bewegungsvektoren ($v_1$, $v_2$) bezüglich zweier Aufnahmebilder durch Erfassen einer Abweichung einer Position eines unverschobenen Teilbildbereichs ($P_1$, $P_2$) zu einer Position eines verschobenen Teilbildbereichs in einem zeitlich folgenden Aufnahmebild ermittelt werden.

3. Verfahren nach Patentanspruch 1, oder 2,
   **dadurch gekennzeichnet, dass** die Bewegungsparameter
   eine x-Translation ($T_x$) zur Quantifizierung einer verschiebe-Bewegung in x-Richtung;
   eine y-Translation ($T_y$) zur Quantifizierung einer Verschiebe-Bewegung in y-Richtung;
   eine Rotation ($\theta$) zur Quantifizierung einer Drehbewegung; und einen Zoomfaktor (Z) zur Quantifizierung einer Zoombewegung aufweisen.

4. verfahren nach einem der Patentansprüche 1 bis 3,
   **dadurch gekenneichnet,** dass die zum Ermitteln der Bewegungsvektoren ($v_1$, $v_2$) verwendeten Teilbildbereiche ($P_1$, $P_2$) achsensymmetrisch zur x- oder y-Achse des Koordinatensystems liegen.

5. Verfahren nach einem der Patentansprüche 1 bis 4,
   **dadurch gekennzeichnet, dass** die zum Ermitteln der Bewegungsvektoren ($v_1$, $v_2$) verwendeten Teilbildbereiche ($P_1$, $P_2$) derart ausgewählt werden, dass ein Mittelwert ihrer zugehörigen Bewegungsvektor-Ortskoordinaten (x, y) den Wert [0,0] ergibt.

6. verfahren nach einem der Patentansprüche 1 bis 5,
   **dadurch gekennzeichnet, dass** zwei oder vier Bewegungsvektoren ermittelt werden.

7. Verfahren nach einem der Patentansprüche 1 bis 6.
   **dadurch gekennzeichnet, dass** die Bewegungsparameter mit der Gleichung

mit

.

ermittelt werden, wobei $x_i$, $y_i$ die Bewegungsvektor-Ortskoordinaten, n die Anzahl der Bewegunsvektoren, und $v_{xi}$, $v_{yi}$ die Bewegungsvektoren in die x- und y-Richtung darstellen.

**8.** Verfahren nach einem der Patentansprüche 1 bis 7, **dadurch gekennzeichnet, dass** der Rotationswinkel $\alpha = \tan^{-1}(\theta)$ ist.

**9.** Vorrichtung zum Ermitteln einer Bewegung von Aufnahmebildern mit
einer Aufnahmeeinheit ($\lambda$E) zum Erzeugen einer Bildfolge von Aufnahmebildern (I);
einer Bewegungsvektor-Ermittlungseinheit (1) zum Ermitteln von zumindest zwei Bewegungsvektoren ($v_1$, $v_2$) für Teilbildbereiche ($P_1$, $P_2$) in zeitlich aufeinander folgenden Aufnahmebildern (I) der Bildfolge;
einer Orts-Ermittlungseinheit (2) zum Ermitteln von den Bewegungsvektoren zugehörigen Bewegungsvektor-Ortskoordinaten (x, y), wobei ein Koordinatensystem einen Ursprung (OA) in einem der optischen Achse der Aufnahmeeinheit (AE) zum Erzeugen der Aufnahmebilder (I) zugehörigen Punkt aufweist; und
einer Bewegunsparameter-Ermittlungseinhelt (3) zum Ermitteln von Bewegungsparametern ($T_x$, $T_y$, $\theta$, z) der Aufnahmebilder auf der Grundlage der ermittelten Bewegungsvektoren ($v_1$, $v_2$) und der zugehörigen ermittelten Bewegungsvektor-Ortskoordinaten (x, y) ;
**dadurch gekennzeichnet, dass** die Bewegungsvektor-Ermittlungseinheit (1) die Teilbildbereiche ($P_1$, $P_2$) derart auswählt, dass sie punktsymmetrisch zum Koordinatensystem-Ursprung (**OA**) liegen.

**10.** Vorrichtung nach Patentanspruch 9,
**dadurch gekennzeichnet, dass** die Bewegungsvektor-Ermittlungseinheit (1) die Bewegungsvektoren ($v_1$, $v_2$) bezüglich zweier Aufnahmebilder durch Erfassen einer Abweichung einer Position eines unverschobenen Teilbildbereichs ($P_1$, $P_2$) zu einer Position eines verschobenen Teilbildbereichs in einem zeitlich folgenden Aufnahmebild ermittelt.

**11.** Vorrichtung nach einem der Patentansprüche 9 bis 10,
**dadurch gekennzeichnet, dass** die Bewegungsvektor-Ermittlungseinheit (1) die Teilbildbereiche ($P_1$, $P_2$) derart auswählt, dass sie achsensymmetrisch zur x- oder y-Achse des Koordinatensystems liegen.

**12.** Vorrichtung nach einem der Patentansprüche 9 bis 11,
**dadurch gekennzeichnet, dass** die Bewegungsvektor-Ermittlungseinheit (1) die Teilbildbereiche ($P_1$, $P_2$) derart auswählt, dass ein Mittelwert ihrer zugehörigen Bewegunsvektor-Ortskoordinaten (x, y) den Wert [0,0] ergibt.

**13.** Vorrichtung nach einem der Patentansprüche 9 bis 12,
**dadurch gekennzeichnet, dass** die Bewegungsparameter-Ermittlungseinheit (3) eine x-Translation ($T_x$) zur Quantifizierung einer Verschiebe-Bewegung in x-Richtung, eine y-Translation ($T_y$) zur Quantifizierung einer Verschiebe-Bewegung in y-Richtung, eine Rotation ($\theta$) zur Quantifizierung einer Drehbewegung, und einen Zoomfaktor (Z) zur Quantifizierung einer Zoombewegung ausgibt.

**14.** Vorrichtung nach einem der Patentansprüche 9 bis 13,
**dadurch gekennzeichnet, dass** die Bewegungsparameter-Ermittlungseinheit (3) die Bewegungsparameter mit der Gleichung

$$\begin{bmatrix} Z \\ \Theta \\ T_x \\ T_y \end{bmatrix} = \frac{1}{Det} \begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix} \begin{bmatrix} S_{xv_x}-S_{yv_y} \\ S_{yv_x}-S_{xv_y} \\ S_{v_x} \\ S_{v_y} \end{bmatrix}$$

mit

$$Det = n^2(S_{xx}+S_{yy})^2-(S_x^2+S_y^2)^2$$

$$S_x = \sum_{i=1}^{n} x_i \quad S_{xx} = \sum_{i=1}^{n} x_i^2 \quad S_{v_x} = \sum_{i=1}^{n} v_{xi} \quad S_{xv_x} = \sum_{i=1}^{n} x_i v_{xi}$$

$$S_y = \sum_{i=1}^{n} y_i \quad S_{yy} = \sum_{i=1}^{n} y_i^2 \quad S_{v_y} = \sum_{i=1}^{n} v_{yi} \quad S_{yv_y} = \sum_{i=1}^{n} y_i v_{yi}$$

$$S_{yv_x} = \sum_{i=1}^{n} y_i v_{xi} \quad S_{xv_y} = \sum_{i=1}^{n} x_i v_{yi}$$

ermittelt, wobei $x_i$, $y_i$ die Bewegungsvektor-Ortskoordinaten, n die Anzahl der Bewegungsvektoren, und $v_{xi}$, $v_{yi}$ die Bewegungsvektoren in x- und y-Richtung darstellen.

**15.** Vorrichtung nach einem der Patentansprüche 9 bis 14,
**dadurch gekennzeichnet, dass** es eine mobile Datenverarbeitungseinheit und insbesondere ein Telekommunikationsendgerät (H) darstellt.

**Claims**

**1.** Method for determining a movement of recorded images, having the following steps:

a) Determining at least two motion vectors ($v_1$, $v_2$) for partial image areas ($P_1$, $P_2$) in successive recorded images (I) of an image sequence;
b) Determining motion vector position coordinates (x, y) associated with the motion vectors ($v_1$, $v_2$), wherein a coordinate system has an origin (OA) at a point associated with the optical axis of a recording unit (AE) for generating the recorded images (I); and
c) Determining motion parameters ($T_x$, $T_y$, $\theta$, z) of the recorded images on the basis of the determined motion vectors ($v_1$, $v_2$) and the associated determined motion vector position coordinates (x, y),

**characterized in that** the partial image areas ($P_1$, $P_2$) used for determining the motion vectors ($v_1$, $v_2$) are situated point-symmetrically with respect to the coordinate system origin (OA).

**2.** Method according to Claim 1,
**characterized in that** the motion vectors ($v_1$, $v_2$) are determined with regard to two recorded images by detecting a deviation in a position of an undisplaced partial image area ($P_1$, $P_2$) relative to a position of a displaced partial image area in a successive recorded image.

**3.** Method according to Claim I or 2,
**characterized in that** the motion parameters have
an x translation ($T_x$) for quantifying a displacement motion in the x direction;
a y translation ($T_y$) for quantifying a displacement motion in the y direction;
a rotation ($\theta$) for quantifying a rotational motion; and
a zoom factor (Z) for quantifying a zoom motion.

4. Method according to one of Claims 1 through 3,
   **characterized in that** the partial image areas ($P_1$, $P_2$) used for determining the motion vectors ($v_1$, $v_2$) are situated axis-symmetrically with respect to the x axis or y axis of the coordinate system.

5. Method according to one of Claims 1 through 4,
   **characterized in that** the partial image areas ($P_1$, $P_2$) used for determining the motion vectors ($v_1$, $v_2$) are selected in such a way that an average value of their associated motion vector position coordinates (x, y) results in the value (0, 0).

6. Method according to one of Claims 1 through 5,
   **characterized in that** two or four motion vectors are determined.

7. Method according to one of Claims 1 through 6,
   **characterized in that** the motion parameters are determined using the equation

$$\begin{bmatrix} Z \\ \Theta \\ T_x \\ T_y \end{bmatrix} = \frac{1}{Det} \begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix} \begin{bmatrix} S_x V_x + S_y V_y \\ S_x V_y + S_y V_x \\ S V_x \\ S V_y \end{bmatrix}$$

where

$$Det = n^2(S_{xx}+S_{yy})^2 - (S_x^2 + S_y^2)^2$$

$$S_x = \sum_{i=1}^{n} x_i \; ; \; S_{xx} = \sum_{i=1}^{n} x_i^2 \; ; \; SV_x = \sum_{i=1}^{n} V_{xi} \; ; \; S_x V_x = \sum_{i=1}^{n} x_i \cdot V_{xi} \; ;$$

$$S_y = \sum_{i=1}^{n} y_i \; ; \; S_{yy} = \sum_{i=1}^{n} y_i^2 \; ; \; SV_y = \sum_{i=1}^{n} V_{yi} \; ; \; S_y V_y = \sum_{i=1}^{n} y_i \cdot V_{yi} \; ;$$

$$S_y V_x = \sum_{i=1}^{n} y_i \cdot V_{xi} \; ; \; S_x V_y = \sum_{i=1}^{n} x_i \cdot V_{yi}$$

,

where $x_1$, $y_1$ represent the motion vector position coordinates, n represents the number of motion vectors, and $v_{xi}$, $v_{yi}$ represent the motion vectors in the x and y directions, respectively.

8. Method according to one of Claims 1 through 7,
   **characterized in that** the rotational angle $\alpha = \tan^{-1}(\theta)$.

9. Device for determining a movement of recorded images, having
   a recording unit (AE) for generating an image sequence of recorded images (I);
   a motion vector determination unit (1) for determining at least two motion vectors ($v_1$, $v_2$) for partial image areas ($P_1$, $P_2$) in successive recorded images (I) of the image sequence;
   a position determination unit (2) for determining motion vector position coordinates (x, y) associated with the motion vectors, a coordinate system having an origin (OA) at a point associated with the optical axis of the recording unit (AE) for generating the recorded images (I); and
   a motion parameter determination unit (3) for determining motion parameters ($T_x$, $T_y$, $\theta$, z) of the recorded images on the basis of the determined motion vectors ($v_1$, $v_2$) and the associated determined motion vector position coordinates (x, y);

**characterized in that** the motion vector determination unit (1) selects the partial image areas ($P_1$, $P_2$) in such a way that they are situated point-symmetrically with respect to the coordinate system origin (OA).

10. Device according to Claim 9,
**characterized in that** the motion vector determination unit (1) determines the motion vectors ($v_1$, $v_2$) with regard to two recorded images by detecting a deviation in a position of an undisplaced partial image area ($P_1$, $P_2$) relative to a position of a displaced partial image area in a successive recorded image.

11. Device according to one of Claims 9 through 10,
**characterized in that** the motion vector determination unit (1) selects the partial image areas ($P_1$, $P_2$) in such a way that they are situated axis-symmetrically with respect to the x axis or y axis of the coordinate system.

12. Device according to one of Claims 9 through 11,
**characterized in that** the motion vector determination unit (1) selects the partial image areas ($P_1$, $P_2$) in such a way that an average value of their associated motion vector position coordinates (x, y) results in the value (0, 0).

13. Device according to one of Claims 9 through 12,
**characterized in that** the motion parameter determination unit (3) outputs an x translation ($T_x$) for quantifying a displacement motion in the x direction, a y translation ($T_y$) for quantifying a displacement motion in the y direction, a rotation ($\theta$) for quantifying a rotational motion, and a zoom factor (Z) for quantifying a zoom motion.

14. Device according to one of Claims 9 through 12,
**characterized in that** the motion parameter determination unit (3) determines the motion parameters using the equation

$$
\begin{bmatrix} Z \\ \Theta \\ T_x \\ T_y \end{bmatrix} = \frac{1}{Det} \begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix} \begin{bmatrix} S_xV_x+S_yV_y \\ S_xV_y+S_yV_x \\ SV_x \\ SV_y \end{bmatrix}
$$

where

$$ Det = n^2(S_{xx}+S_{yy})^2-(S_x^2+S_y^2)^2 $$

$$ S_x = \sum_{i=1}^{n} x_i \;;\; S_{xx}=\sum_{i=1}^{n} x_i \;;\; SV_x =\sum_{i=1}^{n} V_{xi} \;;\; S_xV_x=\sum_{i=1}^{n} x_i \cdot V_{xi}; $$

$$ S_y = \sum_{i=1}^{n} y_i \;;\; S_{yy}=\sum_{i=1}^{n} y_i^2 \;;\; SV_y =\sum_{i=1}^{n} V_{yi} \;;\; S_yV_y=\sum_{i=1}^{n} y_i \cdot V_{yi}; $$

$$ S_yV_x =\sum_{i=1}^{n} y_i \cdot V_{xi} \;;\; S_xV_y=\sum_{i=1}^{n} x_i \cdot V_{yi} $$

,

where $x_1$, $y_1$ represent the motion vector position coordinates, n represents the number of motion vectors, and $v_{xi}$, $v_{yi}$ represent the motion vectors in the x and y directions, respectively.

15. Device according to one of Claims 9 through 14,
**characterized in that** the device represents a mobile data processing unit, in particular a telecommunication terminal (H).

**Revendications**

1. Procédé de détermination d'un mouvement dans des images d'une prise de vue, comprenant les étapes consistant à :

   a) déterminer au moins deux vecteurs de mouvement ($v_1$, $v_2$) pour des zones partielles d'image ($P_1$, $P_2$) dans des images de prise de vue (I) qui se succèdent temporellement dans une séquence d'images ;
   b) déterminer à partir des vecteurs de mouvement ($v_1$, $v_2$) des coordonnées locales (x, y) correspondant au vecteur de mouvement, un système de coordonnées ayant une origine (OA) en un point appartenant à l'un des axes optiques d'une unité de prise de vue (AE) destinée à produire les images de prise de vue (I) ; et
   c) déterminer des paramètres de mouvement ($T_x$, $T_y$, $\theta$, Z) des images de prise de vue en fonction des vecteurs de mouvement ($v_1$, $v_2$) déterminés et des coordonnées locales (x, y) correspondantes déterminées pour le vecteur de mouvement,

   **caractérisé par le fait que** les zones partielles d'image ($P_1$, $P_2$) utilisées pour déterminer les vecteurs de mouvement ($v_1$, $v_2$) offrent une symétrie ponctuelle par rapport à l'origine du système de coordonnées (OA).

2. Procédé selon la revendication 1, **caractérisé par le fait que** les vecteurs de mouvement ($v_1$, $v_2$) sont déterminés à propos de deux images de prise de vue par la détection d'un écart entre une position d'une zone partielle d'image ($P_1$, $P_2$) non décalée et une position d'une zone partielle d'image décalée dans une image de prise de vue la suivant dans le temps.

3. Procédé selon l'une des revendications 1 et 2, **caractérisé par le fait que** les paramètres de mouvement comprennent :

   une translation x ($T_x$) pour quantifier un mouvement de translation dans la direction x ;
   une translation y ($T_y$) pour quantifier un mouvement de translation dans la direction y ;
   une rotation ($\theta$) pour quantifier un mouvement de rotation ; et
   un facteur de zoom (Z) pour quantifier un mouvement de zoom.

4. Procédé selon l'une des revendications 1 à 3, **caractérisé par le fait que** les zones partielles d'image ($P_1$, $P_2$) utilisées pour la détermination des vecteurs de mouvement ($v_1$, $v_2$) offrent une symétrie axiale par rapport à l'axe x ou y du système de coordonnées.

5. Procédé selon l'une des revendications 1 à 4, **caractérisé par le fait que** les zones partielles d'image ($P_1$, $P_2$) utilisées pour la détermination des vecteurs de mouvement ($v_1$, $v_2$) sont sélectionnées de manière qu'une valeur moyenne des coordonnées locales (x, y) correspondantes de leurs vecteurs de mouvement donne la valeur (0, 0).

6. Procédé selon l'une des revendications 1 à 5, **caractérisé par le fait que** deux ou quatre vecteurs de mouvement sont déterminés.

7. Procédé selon l'une des revendications 1 à 6, **caractérisé par le fait que** les paramètres de mouvement sont déterminés à l'aide de l'équation :

$$\begin{bmatrix} Z \\ \Theta \\ T_x \\ T_y \end{bmatrix} = \frac{1}{Det} \begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix} \begin{bmatrix} S_x V_x + S_y V_y \\ S_x V_y + S_y V_x \\ S V_x \\ S V_y \end{bmatrix}$$

avec

EP 2 243 117 B1

$$Det = n^2(S_{xx}+S_{yy})^2-(S_x^2+S_y^2)^2$$

$$S_x = \sum_{i=1}^{n} x_i \; ; \; S_{xx}=\sum_{i=1}^{n} x_i^2 \; ; \; S_{Vx} = \sum_{i=1}^{n} V_{xi} \; ; \; S_{xVx}=\sum_{i=1}^{n} x_i \cdot V_{xi} \; ;$$

$$S_y = \sum_{i=1}^{n} y_i \; ; \; S_{yy}=\sum_{i=1}^{n} y_i^2 \; ; \; S_{Vy} = \sum_{i=1}^{n} V_{yi} \; ; \; S_{yVy}=\sum_{i=1}^{n} y_i \cdot V_{yi} \; ;$$

$$S_yV_x = \sum_{i=1}^{n} y_i \cdot V_{xi} \; ; \; S_xV_y=\sum_{i=1}^{n} x_i \cdot V_{yi}$$

où $x_i$, $y_i$ représentent les coordonnées locales du vecteur de mouvement, n, le nombre des vecteurs de mouvement et $v_{xi}$, $v_{yi}$, les vecteurs de mouvement dans la direction x et Y.

8. Procédé selon l'une des revendications 1 à 7, **caractérisé par le fait que** l'angle de rotation $\alpha = \tan^{-1}(\theta)$.

9. Dispositif de détermination d'un mouvement d'images de prise de vue, comportant :

   une unité de prise de vue (AE) destinée à produire une séquence d'images de prise de vue (I) ;
   une unité de détermination de vecteurs de mouvement (1) destinée à produire au moins deux vecteurs de mouvement ($v_1$, $v_2$) pour des zones partielles d'image ($P_1$, $P_2$) dans des images de prise de vue qui se succèdent temporellement dans la séquence d'images ;
   une unité de détermination du lieu (2) destinée à déterminer des coordonnées locales de vecteur de mouvement (x, y) correspondant aux vecteurs de mouvement, un système de coordonnées ayant une origine (OA) en un point appartenant à l'un des axes optiques de l'unité de prise de vues (AE) destinée à produire les images de prise de vue (I) ; et
   une unité de détermination de paramètres de mouvement (3) destinée à déterminer des paramètres de mouvement ($T_x$, $T_y$, $\theta$, Z) des images de prise de vue en fonction des vecteurs de mouvement ($v_1$, $v_2$) déterminés et des coordonnées locales (x, y) correspondantes déterminées pour le vecteur de mouvement,
   **caractérisé par le fait que** l'unité de détermination de vecteurs de mouvement (1) sélectionne les zones partielles d'image ($P_1$, $P_2$) de manière qu'elles offrent une symétrie ponctuelle par rapport à l'origine du système de coordonnées (OA).

10. Dispositif selon la revendication 9, **caractérisé par le fait que** l'unité de détermination de vecteurs de mouvement (1) détermine les vecteurs de mouvement ($v_1$, $v_2$) à propos de deux images de prise de vue par la détection d'un écart entre une position d'une zone partielle d'image ($P_1$, $P_2$) non décalée et une position d'une zone partielle d'image ($P_1$, $P_2$) décalée dans une image de prise de vue qui lui succède dans le temps.

11. Dispositif selon l'une des revendications 9 et 10, **caractérisé par le fait que** l'unité de détermination de vecteurs de mouvement (1) sélectionne les zones partielles d'image ($P_1$, $P_2$) de manière qu'elles offrent une symétrie axiale par rapport à l'axe x ou y du système de coordonnées.

12. Dispositif selon l'une des revendications 9 à 11, **caractérisé par le fait que** l'unité de détermination de vecteurs de mouvement (1) sélectionne les zones partielles d'image ($P_1$, $P_2$) de manière qu'une valeur moyenne des coordonnées locales (x, y) correspondantes de leurs vecteurs de mouvement donne la valeur (0, 0).

13. Dispositif selon l'une des revendications 9 à 12, **caractérisé par le fait que** l'unité de détermination des paramètres de mouvement (3) fournit une translation x ($T_x$) pour quantifier un mouvement de translation dans la direction x, une translation y ($T_y$) pour quantifier un mouvement de translation dans la direction y, une rotation ($\theta$) pour quantifier un mouvement de rotation et un facteur de zoom (Z) pour quantifier un mouvement de zoom.

14. Dispositif selon l'une des revendications 9 à 13, **caractérisé par le fait que** l'unité de détermination des paramètres de mouvement (3) détermine les paramètres de mouvement à l'aide de l'équation :

15

$$\begin{bmatrix} Z \\ \Theta \\ T_x \\ T_y \end{bmatrix} = \frac{1}{Det} \begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix} \begin{bmatrix} S_x V_x + S_y V_y \\ S_x V_y + S_y V_x \\ S V_x \\ S V_y \end{bmatrix}$$

avec

$$Det = n^2(S_{xx}+S_{yy})^2 - (S_x^2+S_y^2)^2$$

$$S_x = \sum_{i=1}^{n} x_i \; ; \; S_{xx} = \sum_{i=1}^{n} x_i \; ; \; S_{V_x} = \sum_{i=1}^{n} V_{x_i} \; ; \; S_x V_x = \sum_{i=1}^{n} x_i \cdot V_{x_i} ;$$

$$S_y = \sum_{i=1}^{n} y_i \; ; \; S_{yy} = \sum_{i=1}^{n} y_i^2 \; ; \; S_{V_y} = \sum_{i=1}^{n} V_{yi} \; ; \; S_y V_y = \sum_{i=1}^{n} y_i \cdot V_{yi} ;$$

$$S_y V_x = \sum_{i=1}^{n} y_i \cdot V_{x_i} \; ; \; S_x V_y = \sum_{i=1}^{n} x_i \cdot V_{yi}$$

où $x_i$, $y_i$ représentent les coordonnées locales du vecteur de mouvement, n, le nombre des vecteurs de mouvement et $v_{xi}$, $v_{yi}$, les vecteurs de mouvement dans la direction x et y.

15. Dispositif selon l'une des revendications 9 à 14, **caractérisé par le fait qu'**il constitue une unité mobile de traitement de données et, en particulier, un terminal de télécommunications (H).

# FIG 1

## FIG 2

Translation ($T_x, T_y$)

## FIG 3

Rotation ($\Theta$)

## FIG 4

Zoom (Z)

# FIG 5

$\vec{v}$

OA=RA

Rotation+Translation
(OA=RA)

# FIG 6

$\vec{v}$

OA

Rotation
(OA≠RA)

RA

## FIG 7

$P_1(x_1, y_1)\vec{v}_1$ $\vec{v}_{y_1}$

$\vec{v}_{x_1}$

$y$

$x$

$OA$

$\vec{v}_{x_2}$

$\vec{v}_{y_2}$

$\vec{v}_2$

$P_2(x_2, y_2)$

$\sim I$

$$
\begin{bmatrix}
x_1 & -y_1 & 1 & 0 \\
y_1 & x_1 & 0 & 1 \\
x_2 & -y_2 & 1 & 0 \\
y_2 & x_2 & 0 & 1 \\
& \vdots & & \\
x_n & -y_n & 1 & 0 \\
y_n & x_n & 0 & 1
\end{bmatrix}
\begin{bmatrix}
Z \\
\Theta \\
T_x \\
T_y
\end{bmatrix}
=
\begin{bmatrix}
V_{x_1} \\
V_{y_1} \\
V_{x_2} \\
V_{y_2} \\
\vdots \\
V_{x_n} \\
V_{y_n}
\end{bmatrix}
\tag{1}
$$

$$
\underset{X}{\parallel} \qquad \underset{C}{\parallel} \quad = \quad \underset{Y}{\parallel} \tag{2}
$$

$$
\begin{bmatrix}
Z \\
\Theta \\
T_x \\
T_y
\end{bmatrix}
= \frac{1}{\text{Det}}
\begin{bmatrix}
n & 0 & -S_x & -S_y \\
0 & n & S_y & -S_x \\
-S_x & S_y & S_{xx}+S_{yy} & 0 \\
-S_y & -S_x & 0 & S_{xx}+S_{yy}
\end{bmatrix}
\begin{bmatrix}
S_xV_x+S_yV_y \\
S_xV_y+S_yV_x \\
SV_x \\
SV_y
\end{bmatrix}
\tag{3}
$$

$$
\text{Det} = n^2(S_{xx}+S_{yy})^2-(S_x^2+S_y^2)^2
$$

$$
S_x = \sum_{i=1}^{n} x_i \;\; ; \;\; S_{xx}=\sum_{i=1}^{n} x_i \;\; ; \;\; SV_x = \sum_{i=1}^{n} V_{x_i} \;\; ; \;\; S_xV_x=\sum_{i=1}^{n} x_i \cdot V_{x_i} \;\; ;
$$

$$
S_y = \sum_{i=1}^{n} y_i \;\; ; \;\; S_{yy}=\sum_{i=1}^{n} y_i^2 \;\; ; \;\; SV_y = \sum_{i=1}^{n} V_{yi} \;\; ; \;\; S_yV_y=\sum_{i=1}^{n} y_i \cdot V_{y_i} \;\; ;
$$

$$
S_yV_x = \sum_{i=1}^{n} y_i \cdot V_{x_i} \;\; ; \;\; S_xV_y=\sum_{i=1}^{n} x_i \cdot V_{y_i}
$$

# FIG 8

OA → AE → I → 1 → $\vec{v}_1, \vec{v}_2$ → 3 → $T_x, T_y, \Theta, Z$

2 → $x_1, y_2$ / $x_2, y_2$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 6349114 B1

**In der Beschreibung aufgeführte Nicht-Patentliteratur**

• **X. C. CHEN ; N. CHADDHA.** Lossy adaptive coding of motion vectors with global camera motion compensation. *IEEE Comput. Soc.,* 03. November 1996, 105-108

• Qualitative estimation of camera motion parameters from the linear composition of optical flow. **S.-C. PARK et al.** pattern recognition. Pergamon Press Inc, April 2004, vol. 37, 767-779

• **E. MARCHAND.** Virtual visual servoing: A framework for real-time augmented reality. *Eurographics 2002,* 02. September 2002, vol. 21 (3), 289-298

• Mobile AR4ALL. **C. GEIGER et al.** IEEE and ACM International Symposium on New York, N.Y., USA. IEEE Comput. Soc, 29. Oktober 2001, 181-182